# EUROPEAN PATENT SPECIFICATION

(11) **EP 2 615 226 B1**
(45) Date of publication and mention of the grant of the patent: **06.09.2017**
(21) Application number: 11823695.9
(22) Date of filing: 08.09.2011
(51) Int. Cl.: E04H 12/08, E04C 3/32, E01D 19/14, E01D 21/00, E04H 12/00, F03D 13/20

(54) **STEEL PIPE COLUMN STRUCTURE AND METHOD FOR PRODUCING SAME**
STAHLROHRSÄULE UND VERFAHREN ZU IHRER HERSTELLUNG
STRUCTURE DE COLONNE DE TUYAU D'ACIER ET PROCÉDÉ POUR SA PRODUCTION

(30) Priority: 09.09.2010 JP 2010202112
(43) Date of publication of application: 17.07.2013
(73) Proprietor: JFE Steel Corporation, Tokyo 100-0011 (JP)
(72) Inventor: MURAKAMI, Takuya, Tokyo 100-0011 (JP); KATO, Masashi, Tokyo 100-0011 (JP)
(74) Representative: Stebbing, Timothy Charles
(86) International application number: PCT/JP2011/071063
(87) International publication number: WO 2012/033228

(56) References cited:
- WO-A1-2006/050723
- FR-A1- 2 817 893
- JP-A- 6 229 067
- JP-A- 9 317 085
- JP-A- 11 122 764
- JP-A- H09 317 085
- JP-A- 2005 180 239
- JP-A- 2011 115 829
- JP-U- 59 154 518
- JP-U- S60 104 437

## Description

### [Technical Field]

The present invention relates to a steel-pipe column structure used as a steel smokestack, a bridge main tower, a wind turbine tower, an offshore structure, a building structure, or another structure. The present invention also relates to a method of manufacturing the steel-pipe column structure.

### [Background Art]

Examples of steel-pipe column structures include a steel smokestack, a wind turbine tower, and a substructure for offshore wind power generation.

In view of the steel-pipe diameter in the height direction, such steel-pipe column structures are broadly divided into a group of those having a uniform steel-pipe diameter and a group of those having a steel-pipe diameter that gradually decreases so that the structure is tapered in the height direction.

Generally, the plate thickness of the steel pipes is uniform or gradually reduced in the height direction, but the plate thickness is uniform in the peripheral direction (see Non Patent Literature 1).

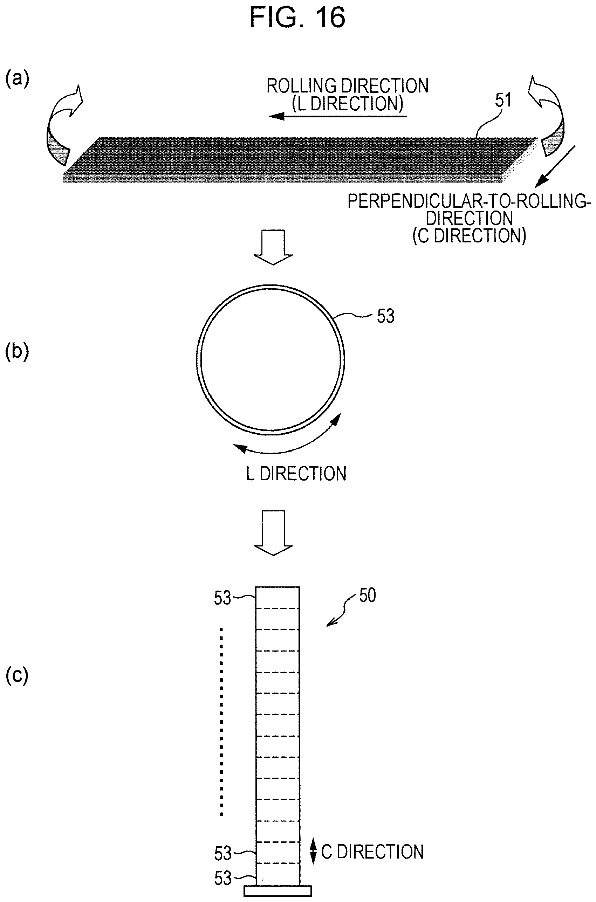

Steel pipes constituting a steel-pipe column structure have a large diameter and a large thickness. In one method of manufacturing such a steel-pipe column structure 50, circular steel pipes 53 illustrated in Fig. 16(b) are each formed by bending a rolled steel plate 51 illustrated in Fig. 16(a). The thus-formed circular steel pipes 53 have a height of 3 to 5 m, which is the width of the rolled steel plate. Then, as illustrated in Fig. 16(c), the circular steel pipes 53 are sequentially stacked on top of one another and joined together by welding, using bolts, or by other means to manufacture the steel-pipe column structure 50.

The manufacturing of the circular steel pipes 53 involves the bending of the rolled steel plates 51 such that the rolled steel plates 51 have curvature in the rolling direction (L direction).

In the case of manufacturing a circular steel pipe 53 having a steel-pipe diameter as large as about 10 m, it may not be possible to form the circular steel pipe 53 out of a single rolled steel plate 1. In such a case, rolled steel plates 51 are joined together to form a longer plate, and then the longer plate is bent into an annular shape to form the circular steel pipe 53.

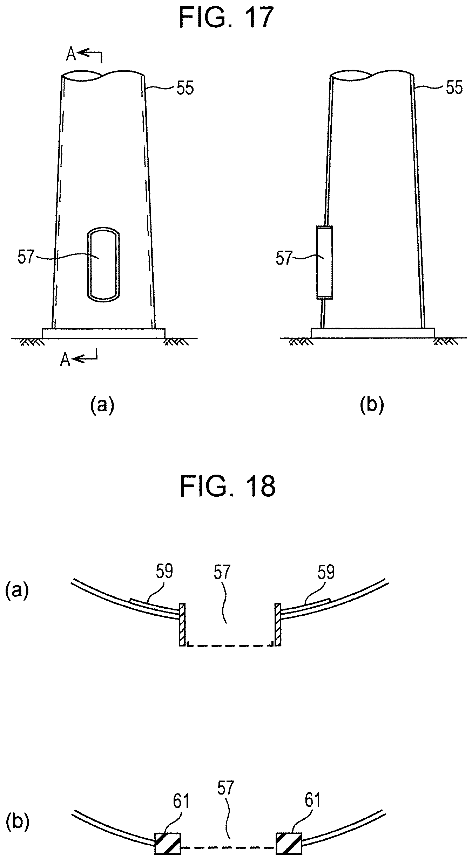

As illustrated in Fig. 17, the steel-pipe column structure 55 may have an opening 57 in its basement, through which people may get in and out of the steel-pipe column structure 55. The opening portion 57 is a partial loss of area and thus has a low proof stress. For this reason, a reinforcement member illustrated in Fig. 18(a) or 18(b) is attached to the opening portion 57.

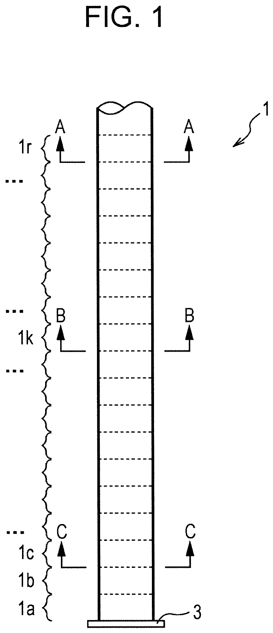

Non Patent Literatures 2 and 3 disclose a way of reinforcing the opening portion 57 by attaching a doubling plate 59 illustrated in Fig. 1B(a) or thickening members 61 illustrated in Fig. 1B(b) to the opening portion 57 and by welding the doubling plate 59 or the thickening members 61 to the opening portion 57.

Patent Literature 1 discloses a metal pipe of generally round shape with a flattened portion without a decrease in wall thickness, the flattened portion serving as a joint part for joining with another member.

Patent Literature 2 discloses a pipe of an elliptical outer peripheral shape, in which the thickness in the direction of the long axis of the ellipse is larger than that along the short axis.

Patent Literature 3 discloses a tubular mast of which the total circumferential length comprises at least three identical section unitary parts, in which each part has two ends and the thickness of the section between the ends varies from a minimum thickness at the ends to a maximum at the section centre.

Patent Literature 4 discloses a tower for a wind turbine, having at least one wall segment and at least one aperture segment. The aperture segment is of a substantially uniform thickness which is thicker than the wall segment.

### [Citation List]

### [Patent Literature]

- [PTL 1]: JP H09 317085 A
- [PTL 2]: JP S60 104437 U
- [PTL 3]: FR 2 817 893 A1
- [PTL 4]: WO 2006/050723 A1

### [Non Patent Literature]

[NPL 1] Tower Steel Construction Design Guide and Manual(1980), Architectural Institute of Japan
[NPL 2] Guidelines for Design of Wind Turbine Support Structures and Foundations(2007 Version)
[NPL 3] Structural Engineering Series 17, September 2007, Japan Society of Civil Engineers

### [Summary of Invention]

### [Technical Problem]

As described in the examples of the related art, the steel-pipe column structure having a uniform thickness in the peripheral direction has a uniform stiffness in the peripheral direction(at every peripheral position). In other words, the resistance force of the steel-pipe column structure is uniform irrespective of the peripheral positions.

On the other hand, the magnitude of an external force is generally different in different directions. For example, if the external force is a force due to wind, there is always a prevailing wind direction. Thus, the magnitude of the external force differs depending on the direction. Consequently, the magnitude of the acting force differs depending on the peripheral position.

If the external force is a force due to a tidal current, there is also a prevailing tidal-current direction. Thus, as in the case of the wind, the magnitude of the acting force differs depending on the peripheral position.

Normally, when a structure is designed, the ratio of a resistance force to an acting force is regarded as a safety ratio. The resistance force is obtained by multiplying the acting force by a certain safety ratio such that the structure has an effective resistance force.

When a steel-pipe column is designed, the resistance force is determined by the steel-pipe diameter and the plate thickness. The steel-pipe diameter, however, may be determined by other factors including manufacturing, methods of construction, and usability. Thus, in many cases, only the plate thickness is determined in relation to the resistance force at the design stage.

To design the steel-pipe column, a force acting on the peripheral position that receives the maximum external force is used as the acting force and a required resistance force obtained by multiplying the acting force by the safety ratio is used as the maximum resistance force of the structure. Then, the plate thickness is determined on the basis of the maximum resistance force.

With the above-described method, except for the acting force acting on the peripheral position requiring the maximum resistance force, the acting force acting on the majority of the steel-pipe column is smaller, and thus the resistance force on the majority of the steel pipe is excessive in relation to the acting force. In other words, the safety ratio, which is a ratio of the resistance force to the acting force, differs depending on the peripheral position: the peripheral position at which the maximum resistance force acts has the smallest safety ratio, and other peripheral positions have larger safety ratios.

However, to design an efficient steel-pipe column, the safety ratio needs to be uniform at all the peripheral positions. In fact, however, the opposite is true. This is the problem with the steel-pipe column structure.

As described above, the steel-pipe column structure may have the opening portion 57 in a portion around the base portion to allow people to get in and out of the steel-pipe column structure. In this case, the opening portion 57 is a partial loss of area and thus needs to be reinforced.

Particularly, a wind generation tower or the like sustains severe fatigue due to oscillations of the tower during the operation of the windmill. Thus, a measure is taken to reduce stress by increasing the plate thickness of a reinforcement member.

However, a measure, such as using a cast steel as the reinforcement member or welding a reinforcement steel plate, increases the number of steps or brings about a problem regarding the quality of the welded portion.

The present invention is made to solve the above problems. An object of the present invention is to provide a steel-pipe column structure that is efficiently designed so as to have a safety ratio that is uniform at all the peripheral positions, and to provide a method of manufacturing the steel-pipe column structure.

Another object of the present invention is to provide a steel-pipe column structure that dispenses with reinforcement such as welding or other means while having an opening portion in an area around its base portion, and to provide a method of manufacturing the steel-pipe column structure.

### [Solution to Problem]

In order to solve the above problems, the inventors have conceived of a steel-pipe column structure in which the plate thickness varies in the peripheral direction at least partially in the height direction of the steel-pipe column structure.

Normally, the prevailing external force acts in one direction or within a peripheral-position range having a certain width.

In view of this, the inventors have conceived of an idea of changing the resistance force of a steel pipe in accordance with the acting force of the external force that differs at peripheral positions by increasing the plate thickness of a portion receiving the prevailing external force. If the plate thickness at the peripheral position receiving the maximum external force is fixed, instead of increasing the plate thickness, the plate thickness at peripheral positions except for the peripheral position receiving the maximum external force may be decreased so as to correspond to the magnitudes of the acting force for these peripheral positions.

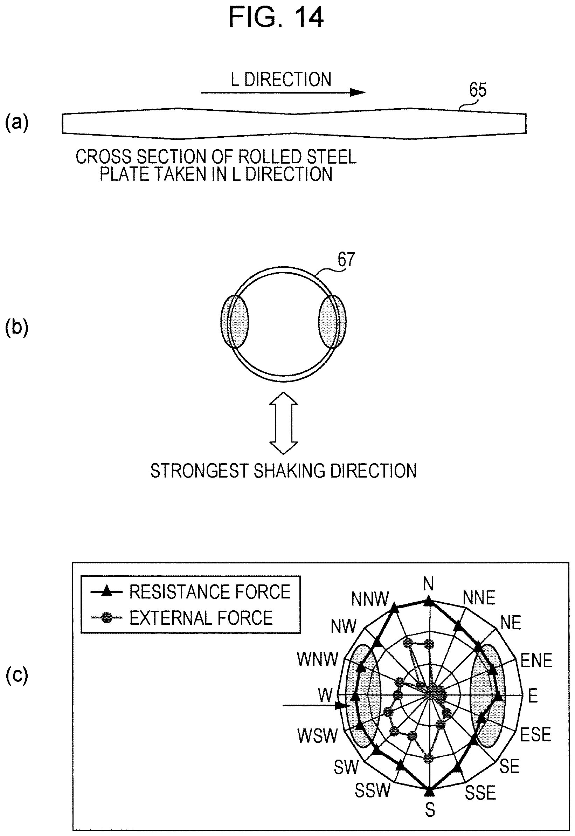

Fig. 14 illustrates a relationship between the external force and the resistance force when the plate thickness of a steel pipe varies in the peripheral direction. In this example, a circular steel pipe 67 illustrated in Fig. 14 (b) is formed out of a varying-thickness-steel plate 65 by coiling the varying-thickness-steel plate 65 in an L direction, which is a rolling direction illustrated in Fig. 14(a), the varying-thickness-steel plate 65 being a rolled steel plate having portions whose plate thickness differs in the rolling direction (L direction) . As illustrated in Fig. 14(b), the plate thickness in left and right regions (shaded regions in the drawing) of the circular steel pipe is small, while the plate thickness in upper and lower regions is large. Here, a case is assumed where the external force acts on upper and lower sides of the steel pipe in the drawing and the steel-pipe column structure shakes in the directions of the arrow in the drawing. Here, as illustrated in Fig. 14(c), a large external force acts in the south-north (SN) direction and a small external force acts in the east-west (EW) direction. It is found that the steel-pipe column structure correspondingly has a large resistance force (section stiffness) in the south-north (SN) direction and a small resistance force in the east-west (EW) direction, and thus has an efficient design.

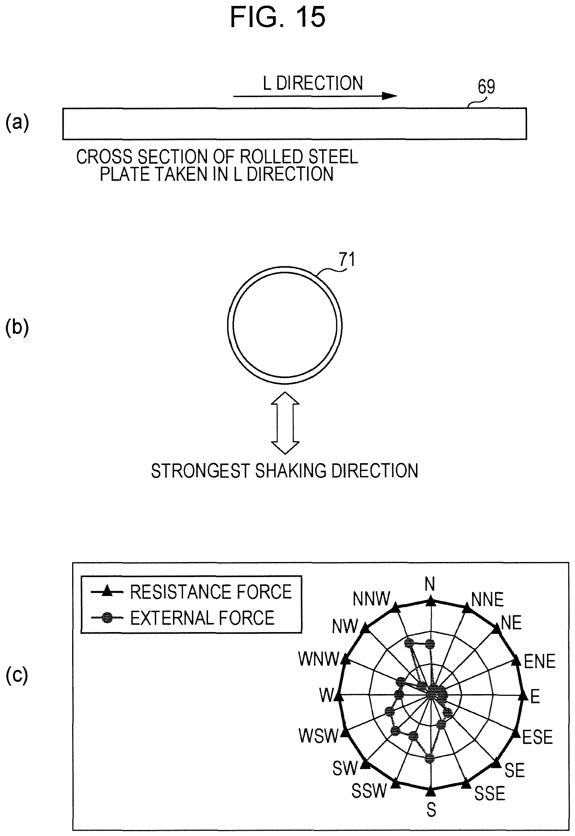

On the other hand, the conventional example is obtained by manufacturing circular steel pipes 71 each having a uniform thickness in the peripheral direction, stacking the circular steel pipes 71 on top of one another, and joining the circular steel pipes 71 together, the circular steel pipes 71 each being formed by coiling a rolled steel plate 69 (see Fig. 15(a)) having a uniform thickness in the L direction. As illustrated in Fig. 15(c), a large external force acts in the south-north (SN) direction and a small external force acts in the east-west (EW) direction as in the case illustrated in Fig. 15(c). However, it is found that the conventional example has a resistance force (section stiffness) that is uniform at all the peripheral positions and thus has an inefficient design.

By varying the plate thickness of the circular steel pipe in the peripheral direction as described above, the section stiffness can vary at different peripheral positions and the resistance force can vary at different peripheral positions depending on the magnitude of the external force. Consequently, the safety ratio (resistance force/acting force) at all the peripheral positions can be made uniform.

The present invention has been made on the basis of the above findings, and specifically has the configuration described below.

The present invention is defined in the claims, reference to which should now be made. Features in embodiments include the following.
(1) A steel-pipe column structure is characterized in that the steel-pipe column structure includes steel pipes, and a plate thickness of the steel pipe varies in a peripheral direction when viewed in a cross section taken perpendicularly to a direction of an axis of the steel-pipe column structure at least partially in a height direction.
(2) The steel-pipe column structure according to (1) described above is also characterized in that the steel pipes are circular steel pipes each obtained by forming a varying-thickness-steel plate into an annular shape, and the steel-pipe column structure is formed by stacking the circular steel pipes on top of one another in the height direction and joining the circular steel pipes together.
(3) The steel-pipe column structure according to (1) or (2) described above is also characterized in that a border portion located between portions having different plate thicknesses has a tapered surface so as to be continuous with the portions.
(4) The steel-pipe column structure according to any oneof (1) to (3) described above is also characterized in that a plurality of regions having a large plate thickness and a plurality of regions having a small plate thickness are alternately formed in the peripheral direction of the steelpipe.
(5) The steel-pipe column structure according to (4) described above is also characterized in that the plurality of regions having a large plate thickness are positioned so as to be symmetric with respect to a line and the plurality of regions having a small plate thickness are positioned so as to be symmetric with respect to another line.
(6) The steel-pipe column structure according to any one of (1) to (5) described above is also characterized in that a region in which the plate thickness has been changed is formed so as to extend only partially in the height direction.
(7) The steel-pipe column structure according to any one of (1) to (6) described above is also characterized in that a region in which the plate thickness has been changed extends from top to bottom at the same position in the peripheral direction, and a rate at which the plate thickness of a lower portion is changed is set to be larger than a rate at which the plate thickness of an upper portion is changed.
(8) The steel-pipe column structure according to any one of (1) to (7) described above is also characterized in that the steel-pipe column structure has an opening portion in part of a peripheral surface of the steel-pipe column structure and the opening portion is formed in a portion having a large plate thickness.
(9) A method of manufacturing a steel-pipe column structure is a method of manufacturing the steel-pipe column structure according to any one of (1) to (8) described above, and is characterized in that, the method includes a circular-steel-pipe manufacturing step of manufacturing circular steel pipes by forming LP steel plates into an annular shape or forming a combination of a plurality of LP steel plates joined together into an annular shape; and a circular-steel-pipe joining step of stacking the manufactured circular steel pipes on top of one another and joining the circular steel pipes together.

Here, the LP steel plate is a thick steel plate that includes a portion in which the plate thickness linearly changes in the rolling direction of the steel plate. The LP steel plate is also referred to as Longitudinally Profiled Steel Plate.

### [Advantageous Effects of Invention]

According to the present invention, the plate thickness of the steel pipe varies in the peripheral direction when viewed in a cross section taken perpendicularly to the axial direction of the steel-pipe column structure. Thus, the steel pipe has an efficient structure in which the safety ratio (resistance of the steel pipe/acting force of the external force) is uniform at all the peripheral positions. This structure requires a smaller amount of steel and thus a steel-pipe column structure can be provided at a low cost.

In addition, increasing the thickness of an opening portion in the base portion of the steel-pipe column eliminates the need to additionally attach a reinforcement member by welding or by other means, reduces the number of steps, and removes the quality problem regarding the welded portion.

### [Brief Description of Drawings]

[Fig. 1] Fig. 1 illustrates a steel-pipe column structure according to an embodiment of the present invention.
[Fig. 2] Fig. 2 illustrates the working of the steel-pipe column structure illustrated in Fig. 1.
[Fig. 3] Fig. 3 illustrates circular steel pipes constituting the steel-pipe column structure according to an embodiment of the present invention.
[Fig. 4] Fig. 4 illustrates a steel-pipe column structure according to another embodiment of the present invention.
[Fig. 5] Fig. 5 is a cross section viewed in the direction of the arrows A-A of Fig. 4.
[Fig. 6] Fig. 6 is a cross section viewed in the direction of the arrows B-B of Fig. 4.
[Fig. 7] Fig. 7 illustrates a first example of the present invention.
[Fig. 8] Fig. 8 is a cross section viewed in the direction of the arrows X-X of Fig. 7.
[Fig. 9] Fig. 9 illustrates a second example of the present invention.
[Fig. 10] Fig. 10 is a cross section viewed in the direction of the arrows A-A of Fig. 9.
[Fig. 11] Fig. 11 is a cross section viewed in the direction of the arrows B-B of Fig. 9
[Fig. 12] Fig. 12 illustrates a method of manufacturing a steel-pipe column structure according to the second example.
[Fig. 13] Fig. 13 is a graph showing results of a test conducted to show the effect of the second example.
[Fig. 14] Fig. 14 is a diagram used for describing a solution to the problem.
[Fig. 15] Fig. 15 is a diagram used for describing a solution to the problem and illustrates a conventional example to be compared with the present invention.
[Fig. 16] Fig. 16 illustrates a steel-pipe column structure according to a conventional example.
[Fig. 17] Fig. 17 illustrates a steel-pipe column structure according to a conventional example having an opening portion in a portion around its base portion, where Fig. 17 (a) is a front view and Fig. 17 (b) is a cross section viewed in the direction of the arrows A-A of Fig. 17(a).
[Fig. 18] Fig. 18 illustrates a structure of reinforcing an opening portion illustrated in Fig. 17.
[Fig. 19] Fig. 19 illustrates a steel-pipe column structure according to another mode of the embodiment of the present invention.
[Fig. 20] Fig. 20 is a cross section viewed in the direction of the arrows A-A of Fig. 19.
[Fig. 21] Fig. 21 illustrates a steel-pipe column structure according to another mode of the embodiment of the present invention.
[Fig. 22] Fig. 22 is a cross section viewed in the direction of the arrows A-A of Fig. 21.
[Fig. 23] Fig. 23 illustrates a steel-pipe column structure which is not in accordance with the present invention but useful for understanding the same.
[Fig. 24] Fig. 24 illustrates another steel-pipe column structure which is not in accordance with the present invention.
[Fig. 25] Fig. 25 is a cross section viewed in the direction of the arrows A-A of Fig. 24.

### [Description of Embodiments]

### [First Embodiment]

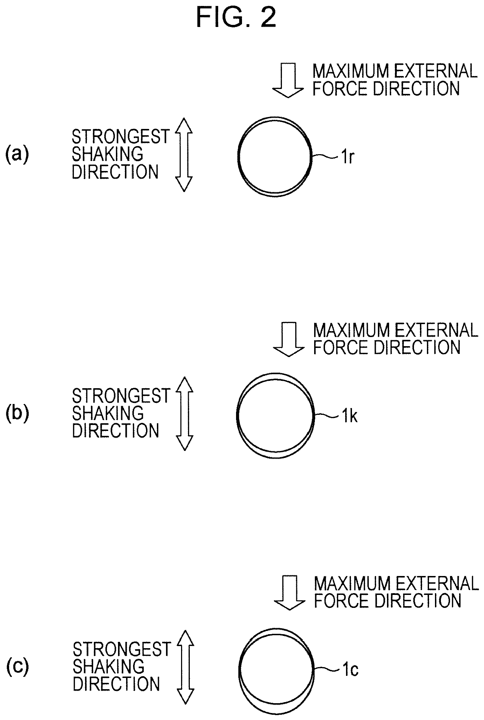

The embodiment will be described with reference to Fig. 1 and Fig. 2.

A steel-pipe column structure 1 according to this embodiment is formed by joining multiple circular steel pipes together, and the plate thickness of the circular steel pipes in a range extending at least partially in the height direction varies in the peripheral direction when viewed in a cross section taken perpendicularly to the axial direction of the circular steel pipe.

Now, the embodiment is specifically described.

In this embodiment, a tower having a windmill facility that is mounted on its upper portion is taken as an example of the steel-pipe column structure 1. The steel-pipe column structure 1 is formed by vertically stacking eighteen circular steel pipes on top of one another on a substructure 3 and joining circular ends together by butt-welding. Welding joints are indicated by broken lines in the drawing, and in order from the bottom, a first circular steel pipe 1a, a second circular steel pipe 1b, ..., and an eighteenth circular steel pipe 1r are stacked. For simplicity, the circular steel pipes are illustrated without the steel-pipe diameter being tapered in the height direction of the circular steel pipes.

A windmill is attached to an upper portion of the steel-pipe column structure 1 according to this embodiment. There is a prevailing direction of wind power, and in Fig. 2, the prevailing direction is from top to bottom in the drawing.

As illustrated in Fig. 2(a), which is a cross section viewed in the direction of the arrows A-A of Fig. 1, Fig. 2(b), which is a cross section viewed in the direction of the arrows B-B of Fig. 1, and Fig. 2(c), which is a cross section viewed in the direction of the arrows C-C of Fig. 1, upper and lower portions of the circular steel pipe having predetermined ranges have a large thickness.

The thickness of the upper and lower portions having the predetermined ranges in the drawings is increased because increasing the thickness of portions positioned correspondingly to the strongest shaking direction due to the wind power increases the fatigue strength against cycles of loading.

As illustrated in Fig. 2(a) and Fig. 2(b), in the cross section (eighteenth circular steel pipe 1r) viewed in the direction of the arrows A-A and the cross section (eleventh circular steel pipe 1k) viewed in the direction of the arrows B-B, the thicknesses of the upper and lower portions of the circular steel pipe in the drawing are symmetric with respect to a line. However, the thick portion in the cross section (eleventh circular steel pipe 1k) viewed in the direction of the arrows B-B is thicker than the thick portion in the cross section (eighteenth circular steel pipe 1r) viewed in the direction of the arrows A-A. This is for increasing the fatigue strength of the lower portion since the lower portion is subjected to larger fatigue due to shaking.

In this manner, in this embodiment, regions in which the plate thickness has been changed are positioned at the same positions (predetermined upper and lower regions in the drawing) at every height, and the rate of change of the plate thickness is larger in the lower portion.

Here, the cross section taken perpendicularly to the direction of the pipe axis of each circular steel pipe is uniform at every height. Thus, the circular steel pipe is clearly distinguished from, for example, a ribbed steel pipe even though the thickness of the ribbed steel pipe varies in the peripheral direction.

As illustrated in Fig. 2(c), also in the cross section (first circular steel pipe 1a) viewed in the direction of the arrows C-C, the thickness of upper and lower regions in the drawing is increased. Here, the thickness of the lower region is larger than that of the lower region in the drawing. The thickness of the lower region is made larger to increase the proof stress of the peripheral position (lower side in the drawing) on which a compressive force acts due to the maximum external force around the base portion of the steel-pipe column structure 1, as a measure taken against fatigue due to shaking and as a measure taken against buckling due to the maximum external force.

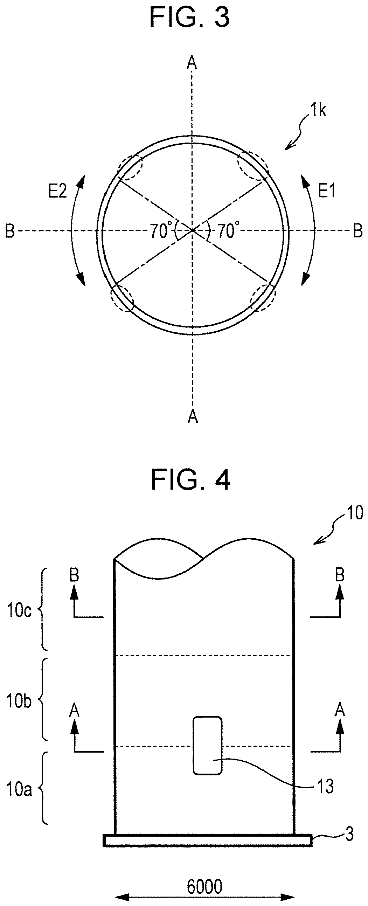

Stress concentration may occur if there is a step at a position at which the plate thickness changes. In view of this, in this embodiment, as illustrated in Fig. 3, which is a cross section of the eleventh circular steel pipe 1k, a thick portion and a thin portion are continued by a tapered surface so that a step is not formed at a position at which the plate thickness changes. In Fig. 3, portions in which tapered surfaces are formed are encircled by ellipses drawn by broken lines. Each tapered surface may have any inclination angle that causes less stress concentration. Preferably and normally, the slope is equal to or less than 1/5 (5mm or larger in length per 1 mm in plate thickness).

Note that no particular problem arises in the case of forming a steel pipe out of a varying-thickness-steel plate, because the inclination angle is approximately 10 mm/m at maximum, which is equivalent to the slope of 1/100 or lower.

In Fig. 3, left and right regions E1 and E2 having an angle of approximately 70° are regions having a small plate thickness, while upper and lower regions excluding the left and right regions E1 and E2 are regions having a large plate thickness. The eleventh circular steel pipe 1k has a cross section that is symmetric with respect to the auxiliary line A-A and the auxiliary line B-B illustrated in Fig. 3.

The example according to this embodiment includes two large-plate-thickness regions and two small-plate-thickness regions, which are alternately formed in the peripheral direction of the steel pipe. The large-plate-thickness regions are positioned so as to be symmetric with respect to a line and the small-plate-thickness regions are positioned so as to be symmetric with respect to another line.

### <Manufacturing Method>

An example of a method of manufacturing the steel-pipe column structure 1 will be described below.

Multiple (eighteen in this example) circular steel pipes in each of which the plate thickness varies in the peripheral direction are manufactured by bending varying-thickness-steel plates (thick steel plates having portions in which the plate thickness differs in the rolling direction of the steel plates) in the rolling direction.

Subsequently, the circular steel pipes are stacked on top of one another, and the joints are joined by butt-welding.

In the steel-pipe column structure 1 according to this embodiment, the plate thickness of the circular steel pipes varies in the peripheral direction when viewed in a cross section taken perpendicularly to the axial direction of the steel-pipe column structure 1. This achieves an efficient structure in which the safety ratio (resistance force of the steel pipe/acting force of the external force) is uniform at all the peripheral positions.

Consequently, a smaller amount of steel is required, and the steel-pipe column structure 1 can be provided at. a low cost.

Heretofore, there has only been a steel-pipe column structure having a plate thickness that increases uniformly at all the peripheral positions. However, varying the plate thickness in the peripheral direction in consideration of different magnitudes of the external force at different peripheral positions enables an efficient structure that requires a smaller amount of steel. It is known that the fatigability is proportional to the stress cubed when the fatigue is critical. The fatigability for each peripheral position is significantly changed by partially increasing the plate thickness by only 1 mm. Thus, a difference of approximately several millimeters in thickness has a sufficiently large effect.

Since the above-described embodiment is a tower on which a wind power facility is installed, portions in which the plate thickness is changed are provided so as to correspond to the direction of the wind power. In this manner, it is only required that the portions in which the plate thickness is changed are approximately positioned so as to correspond to the stress acting in the steel-pipe column structure.

For example, if an ordinary columnar steel pipe has a problem of buckling at its base portion, it is only required to increase the plate thickness at a peripheral position opposite to the peripheral position on which the maximum external force acts (that is, at the peripheral position on which the compression force acts due to the acting force).

Offshore wind towers or piles (monopile or tripile) used for undersea substructures of wind generators may have a problem of fatigue due to shaking during the operation of the windmills. In this case, the stress needs to be reduced by increasing the plate thickness at the peripheral positions at which the shaking is the strongest. Thus, it is only required that thick portions be formed so as to be symmetric with respect to a line and be positioned so as to correspond to the shaking direction. Instead, the cross section may be designed based on the plate thickness at the peripheral position at which the shaking is the strongest and the plate thickness at other peripheral positions at which the shaking is not the strongest may be reduced. Thus, an efficient design is achieved.

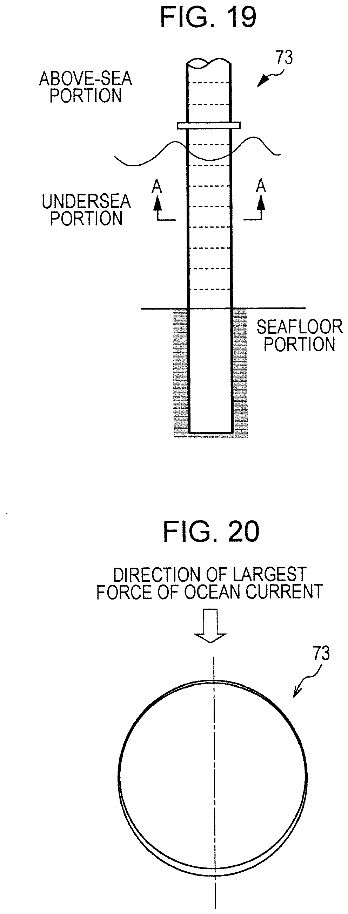

An example of a steel-pipe column installed under the sea is illustrated in Fig. 19 and Fig. 20, which are cross sections viewed in the direction of the arrows A-A of Fig. 19.

A steel-pipe column 73 illustrated in Fig. 19 and Fig. 20 is installed under the sea that is affected by an ocean current. A portion under the sea and at the peripheral position that resists the ocean current has a large plate thickness, the portion extending in the peripheral direction. In Fig. 20, the direction in which the largest force of the ocean current acts is from top to bottom in the drawing, and the steel-pipe column 73 has a larger thickness on the lower side of the drawing.

Since the ocean current has almost the uniform direction and magnitude over a long period, a portion in which the plate thickness is increased is determined considering the local maximum value of the change in the direction of the ocean current, the amount of the change in cycles, and the number of cycles.

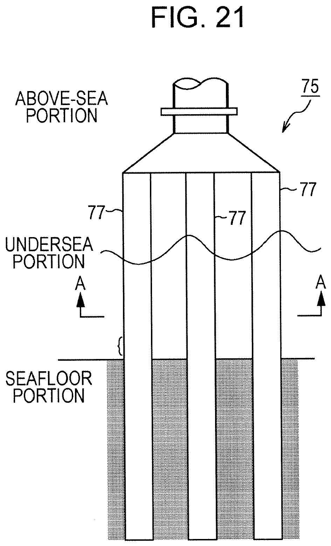

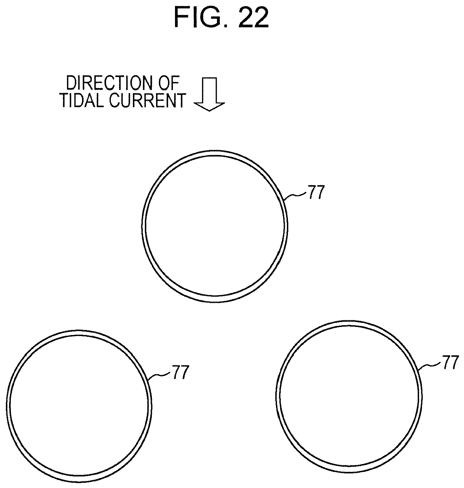

An example of an undersea structure installed under the sea is illustrated in Fig. 21 and Fig. 22, which are cross sections viewed in the direction of the arrows A-A of Fig. 21.

An undersea structure 75 illustrated in Fig. 21 and Fig. 22 is installed under the sea that is affected by the tidal current. The undersea structure 75 includes three steel-pipe columns 77.

The three steel-pipe columns 77 have the same structure. As illustrated in Fig. 22, the plate thickness of each steel-pipe column 77 varies in the peripheral direction, and opposing sides that oppose each other across the diameter have the same plate thickness. Specifically, the plate thickness of portions positioned correspondingly to the directions of the tidal current is increased to increase the flexural rigidity at the portions positioned correspondingly to the directions of the tidal current so that each steel-pipe column 77 resists currents attributable to the tidal current. Since the tidal current is a horizontal motion of seawater accompanying the tide, and the tidal current periodically changes. Thus, the plate thickness at the peripheral positions that resist the currents attributable to the tidal current is increased. Specifically, as illustrated in Fig. 22, the direction from top to bottom in the drawing is a direction of the tidal current at a certain time point t. However, the direction periodically changes. At a different time point t', the direction is from bottom to top in the drawing. For this reason, the steel-pipe column has a larger thickness at upper and lower portions in the drawing.

Increasing the plate thickness at peripheral positions of the steel-pipe column 77 that resist the tidal current conversely means that portions that are not required to resist the tidal current do not have to have a large plate thickness. Considering this, an efficient design is achieved.

In the case where the current changes in various directions, such as in an area having a complex topography, due to various factors, it is only required to determine the plate thickness as needed in accordance with the directions.

When the purpose to be achieved is to make the safety ratio uniform at all the peripheral positions with regard to both buckling and fatigue, a portion having a different thickness and extending in the height direction of the steel-pipe column structure 1 can be provided throughout the height of the steel-pipe column structure 1 as in the case of this embodiment.

On the other hand, considering not only buckling and fatigue but also the required tolerance for its own weight or the limitation of the minimum plate thickness, the present invention may be applied partially to a portion extending in the height direction, i.e., the thickness of a circular steel pipe may be made to vary in the peripheral direction by changing the thickness of only a portion partially extending in the height direction, or the thickness of a polygonal steel pipe may be made to vary in the peripheral direction by changing the thickness of only a portion partially extending in the height direction on at least one surface.

In the first embodiment, portions of the circular steel pipe having different plate thicknesses are continuous with each other via a tapered surface. However, the present invention do not exclude a structure in which a step is formed between portions having different plate thicknesses.

In the present invention, a structure including a circular steel pipe having a circular cross section is described as an example of the steel-pipe column structure.

Although not in accordance with the present invention, the method of forming a pipe may also be applied to a polygonal steel-pipe column. The polygonal steel pipe may have not only a quadrangular (rectangular) cross section, but also a polygonal cross section such as a hexagonal or octagonal cross section. As in the case of the circular steel pipe, the plate thickness of the polygonal steel pipe varies in the peripheral direction such that the polygonal steel pipe has a portion having a large plate thickness and a portion having a small plate thickness in the peripheral direction. Examples of a method of manufacturing such a polygonal steel pipe include one with which an LP steel plate or a tapered plate is formed into a shape having a polygonal cross section by pressbending.

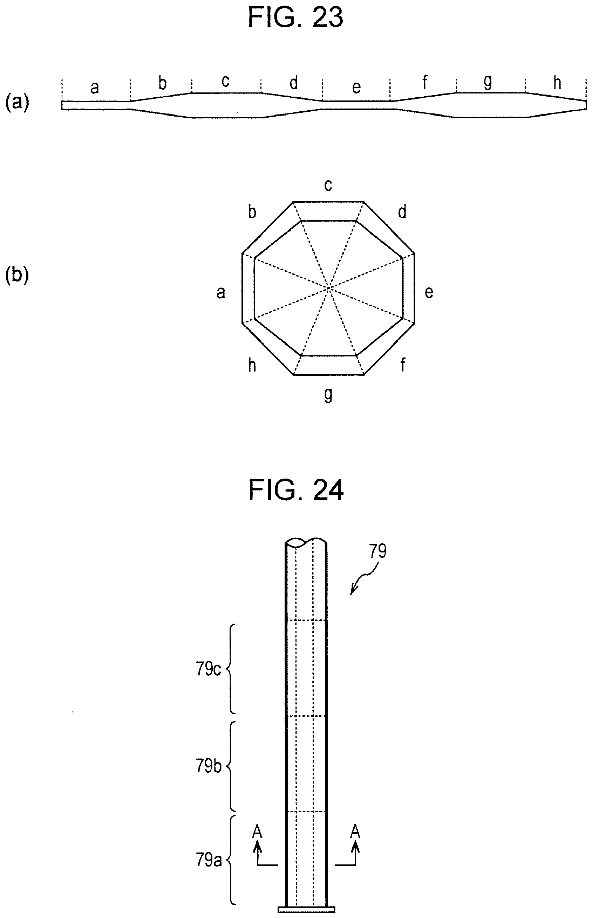

Fig. 23 illustrates a case where an octagonal steel pipe is formed out of an LP steel plate (Fig. 23(a)). The side walls a to h illustrated in Fig. 23 correspond to the side walls a to h illustrated in Fig. 23(b).

As illustrated in Fig. 23(b), in the octagonal cross section, the opposing side walls a and e are thin side walls while the opposing side walls c and g are thick side walls. The side walls b, d, f, and h located between each thick side wall and the corresponding thin side wall are tapered side walls. When the thick side walls are regarded as large-plate-thickness regions and the thin side walls are regarded as small-plate-thickness regions, the example illustrated in Fig. 23 is "it is formed such that the large-plate-thickness regions are positioned so as to be symmetric with respect to a line and the small-plate-thickness regions are positioned so as to be symmetric with respect to another line."

Even if, instead, the thin side walls a and e are regarded as small-plate-thickness regions and the thick side walls and tapered side walls (b, c, and d) (f, g, and h) are regarded as large-plate-thickness regions, the example illustrated in Fig. 23 is "it is formed such that the large-plate-thickness regions are positioned so as to be symmetric with respect to a line and the small-plate-thickness regions are positioned so as to be symmetric with respect to another line."

Also, but not in accordance with the present invention, flat steel plates that constitute the side walls may be arranged in the peripheral direction so as to form a polygon and then may be welded together. In this case, each steel pipe is formed not by coiling in the peripheral direction. Thus, each steel pipe for a steel-pipe column structure to be completed has a long length.

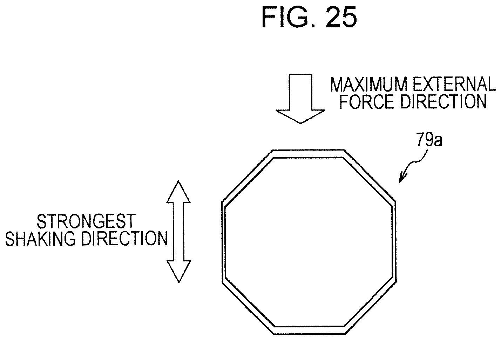

Fig. 25, which is a cross section viewed in the direction of the arrows A-A of Fig. 24, illustrates an example of a polygonal steel-pipe column structure 79 having an octagonal cross section. The example illustrated in Fig. 24 and Fig. 25 is formed by arranging flat steel plates constituting the side walls in the peripheral direction so as to form an octagon and by welding the plates together. The plate thickness of the left and right opposing side walls illustrated in Fig. 25 is the same and is smaller than that of other portions. When plates having different plate thicknesses are joined together by welding as in the above case, the plate thickness is changed at the joint portion. However, a step is not formed at the welded end portions since the welding end portions are welded after grooves are formed by partially cutting the welding end portions.

As illustrated in Fig. 24 and Fig. 25, when flat steel plates are arranged in the peripheral direction so as to form a polygon and are welded together, each steel pipe constituting a columnar structure has a longer length than in the case where the same flat plates are each formed into an annular shape to form a columnar structure. Specifically, the length of a first polygonal steel pipe 79a, a second polygonal steel pipe 79b, and a third polygonal steel pipe 79c constituting the polygonal steel-pipe column structure 79 illustrated in Fig. 24 and Fig. 25 is longer than that of the first circular steel pipe la and other pipes constituting the steel-pipe column structure 1 having a circular cross section illustrated in Fig. 1.

### [Second Embodiment]

The second embodiment will be described referring to Fig. 4 to Fig. 6.

A steel-pipe column structure 10 according to this embodiment has an opening portion 13 in a portion in steel pipes constituting the steel-pipe column structure 10. The steel-pipe column structure 10 is characterized in that the opening portion 13 is formed in a portion having a large plate thickness.

Specific examples of the steel-pipe column structure 10 having the opening portion 13 include a steel smokestack, a wind generation tower, and an undersea substructure pile for a wind generator.

Fig. 4 to Fig. 6 illustrate an example in which steel pipes have a diameter of 6 m (Ø 6000) and that has an opening portion 13 having a width of 1 m and a height of 2 m.

As in the case of the first embodiment, the steel-pipe column structure 10 according to this embodiment is formed by stacking multiple circular steel pipes on top of one another with circular ends of the pipes abutting one another and by welding the abutting ends together. As illustrated in Fig. 4, the steel-pipe column structure 10 according to this embodiment has an opening portion 13 that is formed in a portion that crosses the border between a first circular steel pipe 10a, which is the lowest pipe, and a second circular steel pipe 10b, which is the second lowest pipe.

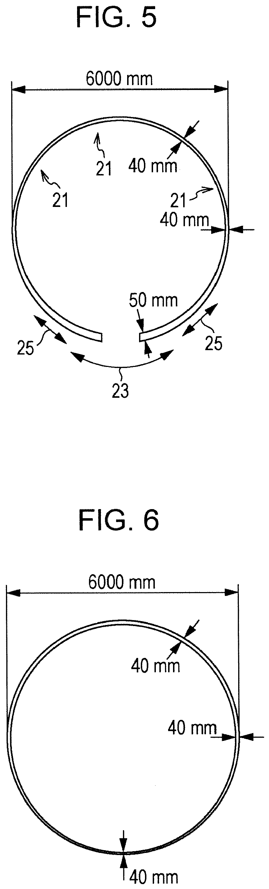

In the lowest first circular steel pipe 10a and the second circular steel pipe 10b on the first circular steel pipe 10a, a region corresponding to the opening portion 13 has a large thickness as illustrated in Fig. 5, which is a cross section viewed in the direction of the arrows A-A of Fig. 4.

A circular steel pipe having a thick region in which the opening portion 13 is formed will be specifically described by taking the second circular steel pipe 10b illustrated in Fig. 5 as an example. The second circular steel pipe 10b includes a normal-plate-thickness region 21, a thick region 23, and a tapered surface region 25 connecting the normal-plate-thickness region 21 and the thick portion.

The second circular steel pipe 10b is formed by bending an LP steel plate such that the L direction is changed to the peripheral direction, the LP steel plate having, for example, a width (C direction) of 3 m and a length (L direction) of approximately 18.8 m (6 m x 3.14 = 18.84 m).

A peripheral region having a dimension of 3 m including the opening portion 13 having a dimension of approximately 1 m and adjacent portions each having a dimension of 1 m serves as the thick region 23, and portions on both sides of the thick region 23 each having a dimension of 1.5 m serve as tapered surface regions 25 that taper at 5 mm/m. The other portion that occupies a half of the circumference of approximately (L direction length: 18.84 - 3 - 1.5 - 1.5 12.84 m) serves as the normal-plate-thickness region 21.

The plate thickness of the normal-plate-thickness region 21 is 40 mm, the plate thickness of the thick region 23 is 50 mm, and the slope of the tapered surface region 25 is 5 mm/m.

As illustrated in Fig. 6, which is a cross section viewed in the direction of the arrows B-B of Fig. 4, a third circular steel pipe 10c, which is the third lowest pipe, has the normal plate thickness (40mm) without the plate thickness varying in the peripheral direction.

The third circular steel pipe 10c is a steel pipe manufactured by using a conventional normal rolled steel plate, which is not a varying-thickness-steel plate.

### <Manufacturing Method>

A method of manufacturing the steel-pipe column structure 10 is the same as that in the first embodiment. With this method, circular steel pipes in which the plate thickness varies in the peripheral direction are manufactured by bending varying-thickness-steel plates in the rolling direction. The circular steel pipes are joined together by subjecting their circular ends to butt-welding. The opening portion 13 may be formed after the circular steel pipes are joined together.

A different-plate-thickness portion and a uniform-plate-thickness portion of an LP steel plate can be manufactured with a control made during rolling. Normally, a pipe can be formed out of a single rolled plate.

However, as the size of a tower increases, the diameter of some steel pipes may exceed 6 m and approach 10 m. In such cases, if a pipe is to be formed using a single rolled plate, the rolled plate has to have a length of approximately 30 m. Such a steel plate is difficult to manufacture and handle during the manufacture. In such cases, preferably, two plates having a length of approximately 15 m are joined together to form a pipe. Here, the two plates may both be LP steel plates or only one of the two plates may be an LP steel plate.

In order to prevent the buckling proof stress due to partial loss of area at the opening portion 13, the buckling proof stress of the steel-pipe column structure 10 according to this embodiment is improved by increasing the plate thickness of the opening portion 13 in advance at the stage of manufacturing the pipe. Consequently, the steel-pipe column structure 10 dispenses with a reinforcement member, thereby eliminating the need for a welding operation accompanying reinforcement. Moreover, although the presence of a welding joint may cause a quality problem or a fatigue crack problem, this embodiment does not have a quality problem or a fatigue crack problem since there is no welding joint for reinforcing the opening portion 13.

In the second embodiment, a structure including circular steel pipes having a circular cross section is taken as an example of the steel-pipe column structure 10, but the method of manufacturing a pipe is also applicable to a polygonal steel-pipe column. In this case, the manufacturing method and other conditions are the same as those described in the first embodiment.

### [First Example]

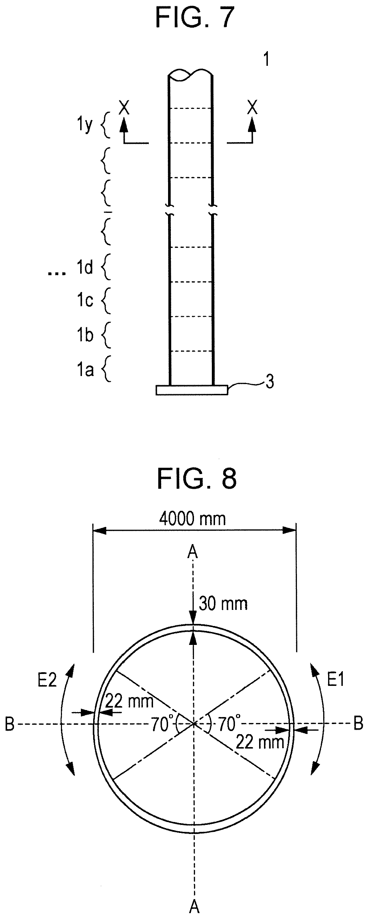

Referring to Fig. 7 and Fig. 8, the first example corresponding to the first embodiment will be described. In Fig. 7 and Fig. 8, portions that are the same as those in Fig. 1 to Fig. 3 are denoted by the same reference symbols.

A steel-pipe column structure 1 according to the first example is formed as a replacement for a conventional steel-pipe column structure 1 having a circular cross section and having a steel-pipe diameter of 4, 000 mm and a plate thickness of 30 mm. With the application of the present invention, the steel-pipe column structure 1 is formed by vertically joining 25 circular steel pipes manufactured by using varying-thickness-steel plates such that each circular steel pipe varies in the peripheral direction when viewed in a cross section.

As illustrated in Fig. 8, which is a cross section viewed in the direction of the arrows X-X of Fig. 7, the steel-pipe column structure 1 according to the first example is formed by using a varying-thickness-steel plate. The steel-pipe column structure 1 has a cross section in which peripheral ranges at an angle 70° have a thickness of 22 mm and portions between the peripheral ranges are smoothly tapered. In Fig. 8, the cross section of the steel-pipe column structure is a cross section that is symmetric with respect to the auxiliary line A-A and the auxiliary line B-B.

The number of cycles of shaking (B-B direction in the drawing) due to the wind blowing in the direction perpendicular to the prevailing wind direction is 40% of the number of cycles of shaking (A-A direction in the drawing) due to the wind blowing in the prevailing wind direction. Thus, 40% of the fatigue life against shaking in the A-A direction is sufficient as the fatigue life against shaking in the B-B direction. For this reason, the plate thickness at the peripheral positions corresponding to the B-B direction is reduced from 30 mm to 22 mm.

By reducing the plate thickness at the peripheral positions corresponding to the B-B direction, the stiffness (secondmoment of area) required for resisting the force acting in the horizontal direction (B-B direction) can be reduced while the stiffness (second moment of area) required for resisting the force acting in the vertical direction (A-A direction) illustrated in Fig. 8 is negligibly changed. Here, the second moment of area at the peripheral positions corresponding to the horizontal direction (B-B direction) is approximately 80%.

According to the beam theory, the stress σ = (M/I)·y (where M denotes bending moment, I denotes second moment of area, and y denotes the distance to the periphery (or the outer radius of the steel pipe in the case of a circular pipe)). Thus, changing the plate thickness only changes the second moment of area, and accordingly the stress is changed. When the second moment of area is 80%, the stress is calculated as 1/0.8 = 1.25. Since the fatigue life is in inverse proportion to the cube of the stress, the fatigue life of the portions having a smaller plate thickness is calculated as 1/(1.25 x 1.25 x 1.25) = 0.51. If the required fatigue life is 40% or more, this cross section fully satisfies this property.

### [Second Example]

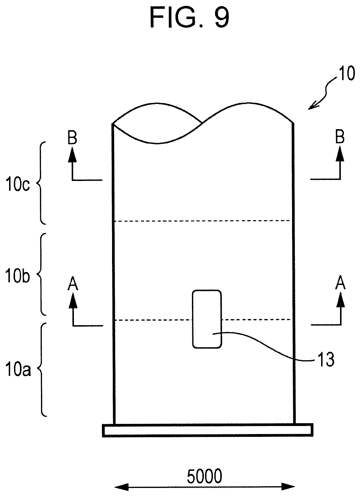

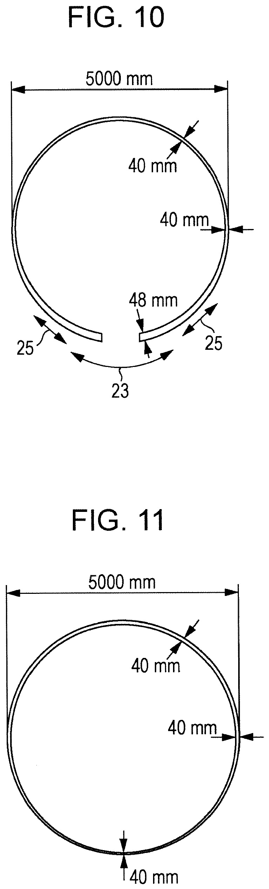

Referring to Fig. 9 to Fig. 11, the second example corresponding to the second embodiment will be described. In Fig. 9 to Fig. 11, portions that are the same as those illustrated in Fig. 4 and Fig. 5 are denoted by the same reference symbols.

A steel-pipe column structure 10 according to the second example has an opening portion 13 (1 m in width x 2 m in height) at the base portion of the steel-pipe column having a diameter of 5 m (Ø 5, 000) and a plate thickness of 40 mm. As a replacement for the conventional example that includes a reinforcement member in a portion around the opening portion 13, the steel-pipe column structure 10 is formed with application of the present invention by using a varying-thickness-steel plate to form an opening portion 13 such that a portion around the opening portion 13 has a large thickness.

In the second example, the plate thickness of a thick region 23, which is a region including the opening portion 13 and adjacent portions each having a dimension of 1 m, is increased by 8 mm from 40 mm, which is the plate thickness of a normal-plate-thickness region 21, to be determined as 48 mm. Border portions between the normal-plate-thickness region 21 and the thick region 23 are defined as tapered surface regions 25 that smoothly taper at 8 mm/m. Portions other than the opening portion 13 have a normal plate thickness without any change in plate thickness.

The steel-pipe column structure 10 according to the second example is manufactured in the following manner.

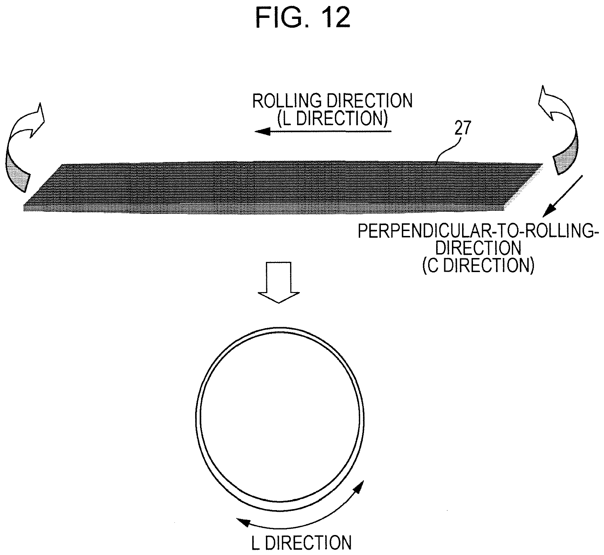

Multiple circular steel pipes are each manufactured by bending a varying-thickness-steel plate 27 in the L direction into an annular shape and welding the end portions together as illustrated in Fig. 12, the rolled steel plates having a width (C direction) of 3 m and a length (L direction) of approximately 15.7 m (5m x 3.14 = 15.7 m). These circular steel pipes are stacked on top of one another in the height direction and are joined together to form the steel-pipe column structure 10.

Rolled steel plates used to form the first circular steel pipe 10a and the second circular steel pipe 10b in which the opening portion 13 is formed are LP steel plates. A region having a dimension of 3 m including the opening portion 13 having a dimension of approximately 1 m and adjacent portions each having a dimension of 1 m has a plate thickness of 48 mm, and portions on both sides of the region each having a dimension of 1 m taper at 2 mm/m. The other portion that occupies a half of the circumference having a dimension of approximately 10.7 m (L direction length of 15.7 - 3 - 1 - 1 = 10.7 m) has a plate thickness of 40 mm.

The plate thickness of the third circular steel pipe 10c does not vary in the peripheral direction.

In the conventional structure, a thick casting member and a reinforcement member have to be installed after the opening portion 13 is formed. In this example, however, the plate thickness is increased with the use of the varying-thickness-steel plate 27, and thus the buckling proof stress is improved. Consequently, this example dispenses with the reinforcement member.

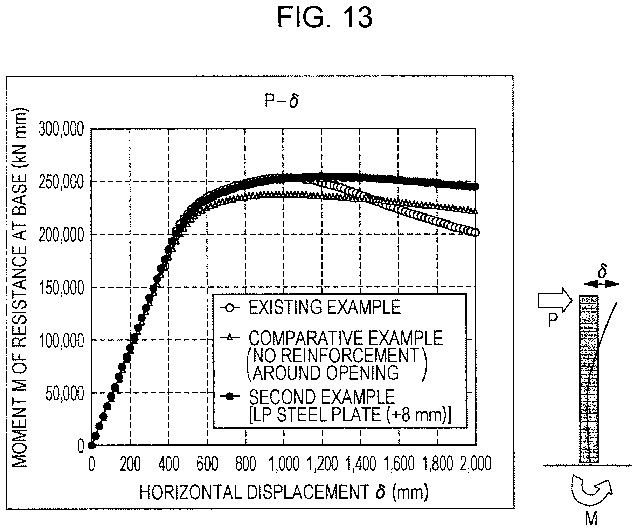

Fig. 13 is a graph showing the results obtained from buckling analysis of the second example. In the graph of Fig. 13, the vertical axis shows moment of resistance (KN mm) at the base portion, and the horizontal axis shows the horizontal displacement (mm). The graph shows results of a conventional example including a reinforcement member at the opening portion 13 (indicated by hollow circles in the graph:o), results of a comparative example in which the opening portion 13 is not reinforced (indicated by triangles in the drawing: Δ), and results of the second example formed by using an LP steel plate (indicated by filled circles in the drawing: ●).

As is found from the graph of Fig. 13, with regard to the comparative example having the opening portion 13 that is not reinforced, the proof stress starts deteriorating while the horizontal displacement is still low. With regard to the conventional example having the reinforced opening portion 13, the proof stress does not start deteriorating until the horizontal displacement reaches a certain level, and after the horizontal displacement reaches the certain level, the proof stress deteriorates. In comparison with these examples, it is found that, with regard to the second example, the proof stress negligibly deteriorates while the horizontal displacement increases.

### [Reference Signs List]

- 1: steel-pipe column structure
- 3: substructure
- 1a: first circular steel pipe
- 1b: second circular steel pipe
- 1k: eleventh circular steel pipe
- 1r: eighteenth circular steel pipe
- 10: steel-pipe column structure
- 13: opening portion
- 10a: first circular steel pipe
- 10b: second circular steel pipe
- 10c: third circular steel pipe
- 21: normal-plate-thickness region
- 23: thick region
- 25: tapered surface region
- 50: steel-pipe column structure
- 51: rolled steel plate
- 53: circular steel pipe
- 55: steel-pipe column structure
- 57: opening portion
- 59: doubling plate
- 61: thickening member
- 65: varying-thickness-steel plate
- 67: circular steel pipe
- 69: rolled steel plate
- 71: circular steel pipe
- 73: steel-pipe column
- 75: undersea structure
- 77: steel-pipe column
- 79: polygonal steel-pipe column structure
- 79a: first polygonal steel pipe
- 79b: second polygonal steel pipe
- 79c: third polygonal steel pipe

## Claims

1. A steel-pipe column structure (1, 50, 73, 77) comprising steel pipes (1a, 1b, ... 1r), wherein a plate thickness of the steel-pipe column structure varies in a peripheral direction when viewed in a cross section taken perpendicularly to a direction of an axis of the steel-pipe column structure at least partially in a height direction; **characterised in that** the steel pipes (1a, 1b, ... 1r) are circular steel pipes each obtained by forming at least one steel plate, having a portion in which the plate thickness varies in the rolling direction, into an annular shape.

2. The steel-pipe column structure (1, 50, 73, 77) according to Claim 1, wherein a region in which the plate thickness varies extends from top to bottom at the same position in the peripheral direction, and a rate at which the plate thickness of a lower portion varies is set to be larger than a rate at which the plate thickness of an upper portion varies.

3. The steel-pipe column structure (1, 50, 73, 77) according to Claim 1 or 2, wherein the steel-pipe column structure has an opening portion (13) in part of a peripheral surface of the steel-pipe column structure and the opening portion is formed in a portion having a large plate thickness.

4. The steel-pipe column structure (1, 50, 73, 77) according to any one of Claims 1 to 3, wherein the steel-pipe column structure is formed by stacking the circular steel pipes (1a, 1b, ... 1r) on top of one another in the height direction and joining the circular steel pipes together.

5. The steel-pipe column structure (1, 50, 73, 77) according to any one of Claims 1 to 4, wherein a border portion located between portions having different plate thicknesses has a tapered surface so as to be continuous with the portions.

6. The steel-pipe column structure (1, 50, 73, 77) according to any one of Claims 1 to 5, wherein a plurality of regions having a large plate thickness and a plurality of regions having a small plate thickness are alternately formed in the peripheral direction of the steel-pipe column structure.

7. The steel-pipe column structure (1, 50, 73, 77) according to Claim 6, wherein the plurality of regions having a large plate thickness are positioned so as to be symmetric with respect to a line and the plurality of regions having a small plate thickness are positioned so as to be symmetric with respect to another line.

8. The steel-pipe column structure (1, 50, 73, 77) according to any one of Claims 1 to 7, wherein a region in which the plate thickness varies in the peripheral direction is formed so as to extend only partially in the height direction.

9. A method of manufacturing the steel-pipe column structure (1, 50, 73, 77) according to any one of Claims 1 to 8, the method comprising: a steel-pipe manufacturing step of manufacturing steel pipes (1a, 1b, ... 1r); and a steel-pipe joining step of stacking the manufactured steel pipes (1a, 1b, ... 1r) on top of one another and joining the steel pipes together; **characterised in that** the steel-pipe manufacturing step comprises forming steel plates, having a portion in which the plate thickness varies in the rolling direction, into an annular shape or forming a combination of a plurality of steel plates, having a portion in which the plate thickness varies in the rolling direction, joined together into an annular shape.

## Patentansprüche

1. Stahlrohrsäulenstruktur (1, 50, 73, 77), umfassend Stahlrohre (1a, 1b, ..., 1r), wobei eine Plattendicke der Stahlrohrsäulenstruktur in einer peripheren Richtung, gesehen in einem Querschnitt rechtwinklig zu einer Richtung einer Achse der Stahlrohrsäulenstruktur mindestens teilweise in einer Höhenrichtung, variiert; **dadurch gekennzeichnet, dass** die Stahlrohre (1a, 1b, ..., 1r) kreisförmige Stahlrohre sind, die jeweils durch Formen mindestens einer Stahlplatte mit einem Abschnitt, in dem die Plattendicke in der Walzrichtung variiert, zu einer Ringform erhalten werden.

2. Stahlrohrsäulenstruktur (1, 50, 73, 77) nach Anspruch 1, wobei sich eine Zone, in der die Plattendicke variiert, von oben nach unten in derselben Position in der peripheren Richtung erstreckt, und eine Rate, bei der die Plattendicke eines unteren Abschnitts variiert, eirlgestellt ist, größer als eine Rate zu sein, bei der die Plattendicke eines oberen Abschnitts variiert.

3. Stahlrohrsäulenstruktur (1, 50, 73, 77) nach Anspruch 1 oder 2, wobei die Stahlrohrsäulenstruktur einen Öffnungsabschnitt (13) in einem Teil einer peripheren Fläche der Stahlrohrsäulenstruktur aufweist, und der Öffnungsabschnitt in einem Abschnitt mit einer größeren Plattendicke gebildet ist.

4. Stahlrohrsäulenstruktur (1, 50, 73, 77) nach Anspruch 1 bis 3, wobei die Stahlrohrsäulenstruktur durch Stapeln der kreisförmigen Stahlrohre (1a, 1b, ..., 1r) aufeinander in der Höhenrichtung und Verbinden der kreisförmigen Stahlrohre miteinander gebildet ist.

5. Stahlrohrsäulenstruktur (1, 50, 73, 77) nach einem der Ansprüche 1 bis 4, wobei ein Randabschnitt, der zwischen Abschnitten mit unterschiedlichen Plattendicken angeordnet ist, eine verjüngte Fläche aufweist, um so mit den Abschnitten kontinuierlich zu sein.

6. Stahlrohrsäulenstruktur (1, 50, 73, 77) nach einem der Ansprüche 1 bis 5, wobei mehrere Zonen mit einer großen Plattendicke und mehrere Zonen mit einer kleinen Plattendicke abwechselnd in der peripheren Richtung der Stahlrohrsäulenstruktur gebildet sind.

7. Stahlrohrsäulenstruktur (1, 50, 73, 77) nach Anspruch 6, wobei die mehreren Zonen mit einer großen Plattendicke derart positioniert sind, dass sie in Bezug auf eine Linie symmetrisch sind, und die mehreren Zonen mit einer kleinen Plattendicke derart positioniert sind, dass sie in Bezug auf eine andere Linie symmetrisch sind.

8. Stahlrohrsäulenstruktur (1, 50, 73, 77) nach einem der Ansprüche 1 bis 7, wobei eine Zone, in der die Plattendicke in der peripheren Richtung variiert, derart gebildet ist, dass sie sich nur teilweise in der Höhenrichtung erstreckt.

9. Verfahren zur Herstellung der Stahlrohrsäulenstruktur (1, 50, 73, 77) nach einem der Ansprüche 1 bis 8, wobei das Verfahren umfasst: einen Stahlrohr-Herstellungsschritt der Herstellung von Stahlrohren (1a, 1b, ..., 1r); und einen Stahlrohr-Verbindungsschritt des Stapelns der hergestellten Stahlrohre (1a, 1b, ..., 1r) aufeinander und Verbindens der Stahlrohre miteinander; **dadurch gekennzeichnet, dass** der Stahlrohr-Herstellungsschritt das Formen von Stahlplatten mit einem Abschnitt, in dem die Plattendicke in der Walzrichtung variiert, zu einer Ringform oder das Formen einer Kombination mehrerer Stahlplatten mit einem Abschnitt, in dem die Plattendicke in der Walzrichtung variiert, die zu einer Ringform verbunden sind, umfasst.

## Revendications

1. Structure de colonne de tuyaux d'acier (1, 50, 73, 77) comprenant des tuyaux d'acier (1a, 1b, ... 1r), dans laquelle une épaisseur de plaque de la structure de colonne de tuyaux d'acier varie dans une direction périphérique lorsqu'elle est observée dans une section transversale prise perpendiculairement à une direction d'un axe de la structure de colonne de tuyaux d'acier au moins partiellement dans une direction de hauteur ; **caractérisé en ce que** les tuyaux d'acier (1a, 1b, ... 1r) sont des tuyaux d'acier circulaires, chacun obtenu en formant au moins une plaque d'acier, ayant une partie dans laquelle l'épaisseur de plaque varie dans la direction de laminage, en une forme annulaire.

2. Structure de colonne de tuyaux d'acier (1, 50, 73, 77) selon la revendication 1, dans laquelle une région dans laquelle l'épaisseur de plaque varie, s'étend de haut en bas dans la même position dans la direction périphérique, et une vitesse à laquelle l'épaisseur de plaque d'une partie inférieure varie, est déterminée pour être plus importante qu'une vitesse à laquelle l'épaisseur de plaque d'une partie supérieure varie.

3. Structure de colonne de tuyaux d'acier (1, 50, 73, 77) selon la revendication 1 ou 2, dans laquelle la structure de colonne de tuyaux d'acier a une partie d'ouverture (13) dans une partie d'une surface périphérique de la structure de colonne de tuyaux d'acier et la partie d'ouverture est formée dans une partie ayant une grande épaisseur de plaque.

4. Structure de colonne de tuyaux d'acier (1, 50, 73, 77) selon l'une quelconque des revendications 1 à 3, dans laquelle la structure de colonne de tuyaux d'acier est formée en empilant les tuyaux d'acier circulaires (1a, 1b, ... 1r) les uns sur les autres dans le sens de la hauteur et en assemblant les tuyaux d'acier circulaires ensemble.

5. Structure de colonne de tuyaux d'acier (1, 50, 73, 77) selon l'une quelconque des revendications 1 à 4, dans laquelle une partie de bordure située entre les parties ayant des épaisseurs de plaque différentes, a une surface progressivement rétrécie afin d'être continue avec les parties.

6. Structure de colonne de tuyaux d'acier (1, 50, 73, 77) selon l'une quelconque des revendications 1 à 5, dans laquelle une pluralité de régions ayant une grande épaisseur de plaque et une pluralité de régions ayant une petite épaisseur de plaque sont formées de manière alternée dans la direction périphérique de la structure de colonne de tuyaux d'acier.

7. Structure de colonne de tuyaux d'acier (1, 50, 73, 77) selon la revendication 6, dans laquelle la pluralité de régions ayant une grande épaisseur de plaque sont positionnées afin d'être symétriques par rapport à une ligne et la pluralité de régions ayant une petite épaisseur de plaque sont positionnées afin d'être symétriques par rapport à une autre ligne.

8. Structure de colonne de tuyaux d'acier (1, 50, 73, 77) selon l'une quelconque des revendications 1 à 7, dans laquelle une région dans laquelle l'épaisseur de plaque varie dans la direction périphérique est formée afin de s'étendre uniquement partiellement dans le sens de la hauteur.

9. Procédé pour fabriquer la structure de colonne de tuyaux d'acier (1, 50, 73, 77) selon l'une quelconque des revendications 1 à 8, le procédé comprenant : une étape de fabrication de tuyaux d'acier consistant à fabriquer des tuyaux d'acier (1a, 1b, ... 1r) ; et une étape d'assemblage de tuyaux d'acer consistant à empiler les tuyaux d'acier (1a, 1b, ... 1r) fabriqués les uns sur les autres et assembler les tuyaux d'acier ensemble ; **caractérisé en ce que** l'étape de fabrication de tuyaux d'acier comprend l'étape consistant à former des plaques d'acier, ayant une partie dans laquelle l'épaisseur de plaque varie dans la direction de laminage, en une forme annulaire ou former une combinaison d'une pluralité de plaques d'acier, ayant une partie dans laquelle l'épaisseur de plaque varie dans la direction de laminage, assemblées en une forme annulaire.
